# EUROPÄISCHE PATENTSCHRIFT

(11) **EP 1 112 238 B1**
(45) Veröffentlichungstag und Bekanntmachung des Hinweises auf die Patenterteilung: **18.12.2002**
(21) Anmeldenummer: 99952564.5
(22) Anmeldetag: 14.10.1999
(51) Int. Cl.: C04B 24/26

(54) **VERWENDUNG VON SCHUTZKOLLOID-STABILISIERTEN VINYLAROMAT-1,3-DIEN-MISCHPOLYMERISATEN IN BAUKLEBER-REZEPTUREN**
UTILISATION OF PROTECTIVE COLLOID-STABILISED AROMATIC VINYL-1,3-DIENE-COPOLYMERS IN ADHESIVE FORMULATIONS USED IN THE BUILDING INDUSTRY
UTILISATION DE COPOLYMERES CONSTITUES D'UN AROMATIQUE VINYLIQUE ET D'UN 1,3-DIENE, STABILISES PAR DES COLLOIDES PROTECTEURS, DANS DES FORMULATIONS DE COLLES POUR BATIMENT

(30) Priorität: 19.11.1998 DE 19853489
(43) Veröffentlichungstag der Anmeldung: 04.07.2001
(73) Patentinhaber: Wacker-Chemie GmbH, 81737 München (DE)
(72) Erfinder: HÄRZSCHEL, Reinhard, D-84489 Burghausen (DE); MAYER, Theo, D-84387 Julbach (DE); WEITZEL, Hans-Peter, D-84571 Reischach (DE)
(74) Vertreter: Schuderer, Michael, Dr.
(86) Internationale Anmeldenummer: EP9907714
(87) Internationale Veröffentlichungsnummer: WO00030992

(56) Entgegenhaltungen:
- EP-A- 0 671 420
- EP-A- 0 723 975
- WO-A-99/16794

## Beschreibung

Die Erfindung betrifft die Verwendung von Schutzkolloid-stabilisierten Vinylaromat-1,3-Dien-Mischpolymerisaten in Form deren wässrigen Polymerdispersionen oder in Wasser redispergierbaren Polymerpulvern in Baukleberrezepturen, speziell solchen für Fliesenkleber und Vollwärmeschutzkleber.

Fliesenkleber auf zementärer Basis werden heute in großen Mengen hergestellt und stellen den Standard dar. Mit zementären Klebern ist es möglich wasserfeste und frostsichere Kleber herzustellen, die durch Modifikation mit unterschiedlichen Mengen an Kunststoff bezüglich Haftung und Flexibilität den notwendigen Anforderungen angepasst werden. Durch den Kunststoffzusatz wird eine deutliche Verbesserung der Verarbeitungssicherheit erreicht, die den Siegeszug der einkomponentigen Trockenmörtel ermöglicht hat.

Voraussetzung für den Einsatz von Polymeren zur Modifikation von Trockenmörteln ist deren Vorliegen als in Wasser redispergierbare Pulver. Fliesenkleber-Zusammensetzungen mit redispergierbaren Polymerpulvern auf der Basis von Vinylester- und Acrylsäureester-Polymerisaten sind aus der EP-A 722917 bekannt. Die Verwendung von hydrophobenen Polymerisaten auf der Basis von Vinylaromat-1,3-Dien-Mischpolymerisaten ist darin nicht beschrieben.

In der DE-A 2148456 (GB-A 1407827) werden wässrige Dispersionen von Styrol-1,3-Butadien-Mischpolymerisaten, welche zur Verbesserung der Naßhaftung Silanolgruppen enthalten und im Emulsionspolymerisations-Verfahren in Gegenwart von Emulgatoren hergestellt worden sind, für wässrige Baukleber-Zusammensetzungen empfohlen. Aufgrund des Emulgatoranteils zeigen Emulgator-stabilisierte Dispersionen reduzierte Bindekraft, insbesondere nach Naßlagerung. Durch die Copolymerisation von Alkoxyvinylsilanen läßt sich zwar die Naßhaftung der emulgatorhaltigen Dispersionen verbessern, in vielen Fällen ist aber die Copolymerisation von solchen, relativ teuren Comonomeren nicht erwünscht.

Die EP-B 182628 betrifft die Verwendung von wässrigen Emulsionen von carboxylfunktionellen und silanolfunktionellen Styrol-Butadien-Mischpolymerisaten, die Zinkammoniumkomplexe enthalten, als Fliesenkleber. Nachteilig ist hierbei, daß lediglich bei Copolymerisation von Alkoxyvinylsilanen und in Anwesenheit von Komplexsalzen Klebemittel mit ausreichender Wasserbeständigkeit erhalten werden.

Die ältere europäische Anmeldung WO 9916794 beschreibt ein Verfahren zur Herstellung von schutzkolloid-stabilisierten Vinylaromat-1.3-Dien-Mischpolymerisaten in wäßrigen Dispersionen, wobei ohne Emulgator gearbeitet wird. Die Verwendung dieser Dispersionen als Bestandteil von Bauklebern ist nicht erwähnt.

Aus der WO-A 97/38042 und der DE-A 19710380 sind Redispersionspulver auf der Basis von carboxylierten Styrol-Butadien-Copolymerisaten bekannt, welche in Gegenwart von Emulgator hergestellt worden sind und mit einem speziellen Gemisch aus Polyvinylalkohol und dem Salz eines Additionsproduktes aus Sulfosuccinamat und Maleinsäure versprüht wird. Nachteilig ist wie bei allen klassischen, emulgatorstabilisierten Pulvern, daß ohne die Copolymerisation von carboxylfunktionellen Monomeren und ohne die Verwendung von speziellen Verdüsungshilfen keine redispergierbaren Pulver erhalten werden.

Es bestand somit die Aufgabe, Baukleber auf der Basis von wässrigen Dispersionen und in Wasser redispergierbaren Pulvern von Vinylaromat-1,3-Dien-Copolymeren zur Verfügung zu stellen, welche im Falle der Pulver auch ohne die Copolymerisation von funktionellen Comonomeren redispergierbar sind und ohne die Verwendung von speziellen Agentien gute Klebeeigenschaften bei der Verwendung als Baukleber aufweisen.

Gegenstand der Erfindung ist die Verwendung von wässrigen Polymerdispersionen oder in Wasser redispergierbaren Polymerpulvern auf der Basis von Schutzkolloid-stabilisierten Vinylaromat-1,3-Dien-Mischpolymerisaten in Baukleberrezepturen, wobei die Polymerdispersionen und die Polymerpulver durch Emulsionspolymerisation eines Gemisches enthaltend mindestens einen Vinylaromaten und mindestens ein 1,3-Dien, in Gegenwart von einem oder mehreren Schutzkolloiden und unter Ausschluß von Emulgator, und gegebenenfalls Trocknung der damit erhaltenen wässrigen Polymerdispersion, erhalten werden.

Geeignete Vinylaromaten sind Styrol und Methylstyrol, vorzugsweise ist Styrol copolymerisiert. Beispiele für 1,3-Diene sind 1,3-Butadien und Isopren, bevorzugt wird 1,3-Butadien. Im allgemeinen enthalten die Copolymerisate 20 bis 80 Gew.-%, vorzugsweise 30 bis 70 Gew.-%, Vinylaromat und 20 bis 80 Gew.-%, vorzugsweise 30 bis 70 Gew.-%, 1,3-Dien, wobei gegebenenfalls noch weitere Monomere enthalten sein können, und sich die Angaben in Gewichtsprozent jeweils auf 100 Gew.-% aufaddieren.

Gegebenenfalls können noch bis zu 30 Gew.-%, bezogen auf das Gesamtgewicht der Monomerphase, weitere mit Vinylaromaten und 1,3-Dienen copolymerisierbare Monomere wie Ethylen, Vinylchlorid, (Meth)acrylsäureester von Alkoholen mit 1 bis 15 C-Atomen oder Vinylester von unverzweigten oder verzweigten Carbonsäuren mit 1 bis 15 C-Atomen copolymerisiert sein.

Gegebenenfalls können noch 0.05 bis 10 Gew.-%, bezogen auf das Gesamtgewicht des Monomergemisches, Hilfsmonomere copolymerisiert sein. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester sowie Maleinsäureanhydrid; ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, daß im allgemeinen eine Glasübergangstemperatur Tg von -70°C bis +100°C, vorzugsweise -50°C bis +50°C, besonders bevorzugt -20°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Geeignete Schutzkolloide sind beispielsweise Polyvinylalkohole, Polysaccharide in wasserlöslicher Form wie Stärken (Amylose und Amylopectin), modifizierte Stärken wie Stärkeether, beispielsweise Hydroxyalkyletherstärken, Dextrine und Cyclodextrine, Cellulosen und deren Carboxymethyl-, Methyl-, Hydroxyethyl-, Hydroxypropyl-Derivate, Poly(meth)acrylsäure, Poly(meth)acrylamid, Melaminformaldehydsulfonate, Naphthalinformaldehydsulfonate.

Bevorzugt sind Polyvinylalkohole mit einem Hydrolysegrad von 80 bis 95 Mol% und einer Höpplerviskosität, in 4 %-iger wässriger Lösung von 1 bis 30 mPas (Methode nach Höppler bei 20°C, DIN 53015). Geeignet sind auch hydrophob modifizierte Polyvinylalkohole mit einem Hydrolysegrad von 80 bis 95 Mol% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylacetats, wobei die hydrophob modifizierten Polyvinylalkohole eine Oberflächenspannung von < 40 mN/m, in 2 %-iger wässriger Lösung erzeugen. Es können auch Gemische der genannten Polyvinylalkohole eingesetzt werden.

Besonders bevorzugt werden die teilverseiften Polyvinylacetate mit Vinylalkohol-Einheiten und Einheiten von Vinylestern von alpha-verzweigten Carbonsäuren mit 5 oder 9 bis 11 C-Atomen in den genannten Mengen. Beispiele für derartige Vinylester sind solche, welche als Versaticsäurevinylester von der Fa. Shell unter den Bezeichnungen VeoVa^{R}5, VeoVa^{R}9, VeoVa^{R}10 und Veo-Va^{R}11 angeboten werden. Weitere geeignete Polyvinylalkohole sind teilverseifte, hydrophobierte Polyvinylacetate, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol%, vorzugsweise 85 bis 94 Mol%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol% und einer Höpplerviskosität, in 4%-iger wässriger Lösung von 2 bis 25 mPas (Methode nach Höppler bei 20°C, DIN 53015) und deren Kombinationen mit den genannten, hydrophob modifizierten Polyvinylestern in einem Gewichtsverhältnis von 10/1 bis 1/10. Die genannten Schutzkolloide sind mittels dem Fachmann bekannter Verfahren zugänglich.

Die Herstellung der schutzkolloidstabilisierten Polymerpulver erfolgt nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen oder Vinylchlorid kann auch unter Druck, im allgemeinen zwischen 5 bar und 100 bar, gearbeitet werden. Die Initiierung der Polymerisation erfolgt mit den für die Emulsionspolymerisation gebräuchlichen Initiatoren oder Redox-Initiator-Kombinationen, beispielsweise Hydroperoxide wie tert.-Butylhydroperoxid, Azoverbindungen wie Azobisisobutyronitril, anorganische Initiatoren wie die Natrium-, Kalium- und Ammoniumsalze der Peroxodischwefelsäure. Die genannten Initiatoren werden im allgemeinen in einer Menge von 0.05 bis 3 Gew.-%, bezogen auf das Gesamtgewicht der Monomere, eingesetzt. Als Redox-Initiatoren verwendet man Kombinationen aus den genannten Initiatoren in Kombination mit Reduktionsmitteln wie Natriumsulfit, Natriumhydroxymethansulfinat, Ascorbinsäure. Die Reduktionsmittelmenge beträgt vorzugsweise 0.01 bis 5.0 Gew.-%, bezogen auf das Gesamtgewicht der Monomere.

Die Stabilisierung des Polymerisationsansatzes erfolgt mittels der genannten Schutzkolloide ohne zusätzliche Emulgatoren. Vorzugsweise wird der Schutzkolloid-Anteil dabei teilweise vorgelegt und teilweise nach Initiierung der Polymerisation zudosiert. Im allgemeinen wird in Gegenwart von 1 bis 25 Gew.-% Schutzkolloid, bezogen auf das Gesamtgewicht der Monomere, polymerisiert. Die Monomere können insgesamt vorgelegt werden, insgesamt zudosiert werden oder in Anteilen vorgelegt werden und der Rest nach der Initiierung der Polymerisation zudosiert werden. Ein geeignetes Herstellungsverfahren ist beispielsweise in der PCT-Anmeldung PCT/EP98/06102 beschrieben, deren diesbezügliche Offenbarung Teil dieser Anmeldung sein soll.

Überraschenderweise konnte festgestellt werden, daß die Bauklebereigenschaften bezüglich deren Verarbeitbarkeit und Haftung stark vom Grad der Vernetzung der 1,3-Dien-Einheiten im Vinylaromat-1,3-Dien-Mischpolymerisat abhängen. Der Grad der Vernetzung kann mittels Polymerisationsreglern gesteuert werden, beispielsweise mittels n-Dodecylmercaptan, t-Dodecylmercaptan, Mercaptopropionsäure, Mercaptopropionsäuremethylester, Isopropanol und Acetaldehyd, welche im allgemeinen während der Polymerisation zudosiert werden. Als Optimum für den Vernetzungsgrad der Basispolymerisate wurde der Bereich von 60 bis 80 % ermittelt, das heißt 60 bis 80 Gew.-% der polymeren Anteile sind in Tetrahydrofuran unlöslich. Zur Einstellung des Vernetzungsgrades wird in Abhängigkeit von der Copolymerzusammensetzung, das heißt des 1,3-Diengehaltes und abhängig von den Polymerisationsbedingungen, speziell der Polymerisationstemperatur die Reglermenge so gewählt, daß der gewünschte Vernetzungsgrad erhalten wird. Im allgemeinen werden dazu 0.2 bis 2.5 Gew.-% Regler, bezogen auf die Comonomermenge, eingesetzt.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen enthalten im allgemeinen 1 bis 25 Gew.-% Schutzkolloid, bezogen auf den Polymeranteil, und haben einen Feststoffgehalt von 30 bis 75 Gew.-%, vorzugsweise von 40 bis 65 Gew.-%.

Zur Herstellung der in Wasser redispergierbaren Polymerpulver werden die wässrigen Dispersionen getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zweioder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Die Gesamtmenge an Schutzkolloid vor dem Trocknungsvorgang soll vorzugsweise mindestens 10 Gew.-%, bezogen auf den Polymeranteil betragen. Zur Gewährleistung der Redispergierbarkeit ist es in der Regel erforderlich der Dispersion vor der Trocknung weitere Schutzkolloide als Verdüsungshilfe zuzugeben. In der Regel beträgt der Anteil an Schutzkolloid vor der Verdüsung der Dispersion 5 bis 25 Gew.-%, bezogen auf die polymeren Bestandteile der Dispersion.

Geeignete Verdüsungshilfen sind teilverseifte Polyvinylacetate; Polyvinylpyrrolidone; Polysaccharide in wasserlöslicher Form wie Stärken (Amylose und Amylopectin), modifizierte Stärken wie Stärkeether, beispielsweise Hydroxyalkyletherstärken; Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)-acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden als Verdüsungshilfe teilverseifte Polyvinylacetate mit einem Hydrolysegrad von 80 bis 95 Mol%, einer Höppler-Viskosität von 1 bis 30 mPas, welche gegebenenfalls wie oben angegeben hydrophob modifiziert sein können.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, versetzt werden. Beispiele für Antiblockmittel sind Ca- bzw. Mg-Carbonat, Talk, Gips, Kieselsäure, Silicate mit Teilchengrößen vorzugsweise im Bereich von 10 nm bis 10 µm.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Zur Herstellung der Baukleber wird die Polymerdispersion bzw. das Polymerpulver-Zusammensetzung mit den weiteren Rezepturbestandteilen wie Zement, Füllstoff und weiteren Zuschlägen in geeigneten Mischern gemischt und homogenisiert. Die Dispersionspulver-Zusammensetzung kann gegebenenfalls auch in Form einer wässrigen Redispersion auf der Baustelle zugegeben werden (2-Komponenten-Kleber). Vorzugsweise wird eine Trockenmischung hergestellt und das zur Verarbeitung erforderliche Wasser unmittelbar vor der Verarbeitung hinzugefügt. Bei der Herstellung von pastösen Bauklebern wird zunächst der Wasseranteil vorgelegt, die Dispersion zugegeben und abschließend die Feststoffe eingerührt.

Die Dispersionen bzw. Pulver eignen sich zur Verwendung in zementhaltigen Baukleberrezepturen. Typische Rezepturen enthalten 5 bis 80 Gew.-% Zement, 5 bis 80 Gew.-% Füllstoffe wie Quarzsand, Calciumcarbonat oder Talkum, 0.1 bis 2 Gew.-% Verdickungsmittel wie Celluloseether, Schichtsilikate, Polyacrylate, 0.5 bis 60 Gew.-% der Schutzkolloid-stabilisierten Vinylaromat-1,3-Dien-Mischpolymerisate in Form der Polymerdispersion bzw. des Polymerpulvers und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur. Die genannten zementhaltigen Baukleberrezepturen finden vor allem bei der Verlegung von Fliesen aller Art (Steingut, Steinzeug, Feinststeinzeug, Keramik, Naturfliesen) im Innenund Außenbereich als Fliesenkleber Verwendung und werden vor deren Verwendung noch mit der entsprechenden Menge Wasser angerührt.

Die Schutzkolloid-stabilisierten Vinylaromat-1,3-Dien-Mischpolymerisate eignen sich auch zur Verwendung in zementfreien Baukleberrezepturen, beispielsweise mit der entsprechenden Menge Gips als anorganischem Bindemittel in der obengenannten Rezeptur. Die zementfreien Baukleberrezepturen finden vor allem bei der Verlegung von Fliesen aller Art (Steingut, Steinzeug, Feinststeinzeug, Keramik, Naturfliesen) im Innenbereich als Fliesenkleber und bei der Verklebung von Polystyrolplatten auf Fassaden als Vollwärmeschutzkleber Verwendung.

Die wässrigen Dispersionen der Schutzkolloid-stabilisierten Vinylaromat-1,3-Dien-Mischpolymerisate werden insbesondere in pastösen Baukleber-Rezepturen der oben beschriebenen Zusammensetzung bezüglich anorganischem Bindemittel, Füllstoff und Verdicker eingesetzt. Pastöse Baukleber werden vor allem als Fliesenkleber und als Vollwärmeschutzkleber eingesetzt.

Es wurden folgende Dispersionspulver auf deren Eignung als Baukleber getestet:

### Vergleichsbeispiel 1:

Dispersionspulver auf Basis eines in Gegenwart von Polyvinylalkohol (Hydrolysegrad 88 Mol%, Höppler-Viskosität 4 mPas) polymerisierten Styrol-Butylacrylat-Copolymerisats mit einem Styrol-Gehalt von 45 Gew.-% und einem Butylacrylat-Gehalt von 55 Gew.-%.

### Beispiele 2 bis 6:

Dispersionspulver auf Basis eines in Gegenwart von Polyvinylalkohol (Hydrolysegrad 88 Mol%, Höppler-Viskosität 4 mPas) polymerisierten Styrol-Butadien-Copolymerisats mit einem Styrol-Gehalt von 65 Gew.-% und einem Butadiengehalt von 35 Gew.-% und den in der Tabelle angegebenen Vernetzungsgrade.

### Anwendungstechnische Prüfung:

### Bestimmung des Röhrenabsitz:

Zur Bestimmung des Absitzverhaltens wurden jeweils 50 g des Dispersionspulvers in 50 ml Wasser redispergiert, danach auf 0.5 % Festgehalt verdünnt und die Absitzhöhe an Feststoff von 100 ml dieser Redispersion in eine graduierte Röhre gefüllt und das Absetzen nach 1 Stunde und nach 24 Stunden gemessen.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
- 1 =: sehr gute Blockstabilität
- 2 =: gute Blockstabilität
- 3 =: befriedigende Blockstabilität
- 4 =: nicht blockstabil, Pulver nach Zerdrücken nicht mehr rieselfähig.

### Bestimmung der Vernetzung:

Zur Bestimmung des Vernetzungsgrades wurde von der nach der Polymerisation erhaltenen Polymerdispersion ein Film gegossen und der lufttrockene Film anschließend 5 Minuten bei 150°C im Trockenschrank getempert. Der getemperte Film wurde in Tetrahydrofuran (THF) aufgenommen und anschließend 6 Stunden lang unter Rückfluß erhitzt. Nach Abkühlung wurde ein Teil der klaren Lösung genommen und nach Entfernung des Lösungsmittels der lösliche Anteil bestimmt. Der in THF unlösliche Anteil wurde aus der Einwaage und dem löslichen Anteil errechnet.

Zur Testung der Verarbeitbarkeit und der Klebeeigenschaften wurden die Dispersionspulver in der folgenden Fliesenkleber-Rezeptur verarbeitet. Die Trockenbestandteile wurden dazu in einem Mörtelmischer vorgelegt, der Wasseranteil zugegeben und das Gemisch anschließend verrührt.

### Fliesenkleber-Rezeptur:

| | |
|---|---|
| 350 Gew.-Teile | Zement |
| 58 Gew.-Teile | Quarzsand Nr. 9a |
| 578 Gew.-Teile | Quarzsand Nr. 12 |
| 4 Gew.-Teile | Verdickungsmittel (Walocel MKX 40000PF50) |
| 10 Gew.-Teile | Dispersionspulver |
| 240 Gew.-Teile | Wasser |

### Prüfung des Verarbeitungsverhaltens:

Das Verarbeitungsverhalten der Fliesenkleber wurde direkt nach deren Herstellung und eine Stunde später beurteilt. Dazu wurden die Kleberzubereitungen auf eine Konsistenz eingestellt, die das Abrutschen einer Fliese mit 10 x 10 cm² auf einem nichtsaugenden Untergrund (weitere Fliese) verhindert. Beurteilt wurde die Leichtgängigkeit beim Kleberauftrag, der Viskositätsanstieg während der einen Stunde Wartezeit und das optische Erscheinungsbild (Blasenbildung) unmittelbar nach Herstellung und nach einer Stunde. Die Beurteilung erfolgte qualitativ mit einem Notensystem von 1 bis 6.

### Bestimmung der Haftzugfestigkeiten:

Zur Prüfung der Haftzugfestigkeit wurden die Fliesenkleber mit einer 5 mm Zahnspachtel auf Betonplatten aufgezogen. Danach wurden 5 x 5 cm² Steinzeugfliesen eingelegt und 30 Sekunden lang mit einem 2 kg schweren Gewicht beschwert. Anschließend wurden die Fliesen unter den folgenden Bedingungen gemäß DIN CEN 1897 gelagert:
28 T: 28 Tage Normklima (DIN 50014, 23 °C, 50 % Luftfeuchte). 7T/21N: 7 Tage Normklima und 21 Tage Naßlagerung in Wasser (20°C).
14T/14TS: 14 Tage Normklima, 14 Tage Trockenschrank bei 70°C, 1 Tag Normklima.
Frost-Tau: 7 Tage Normklima, 21 Tage Naßlagerung, 25 Frost-Tau-Zyklen (Frostlagerung bei mind. -15°C, Wasserlagerung bei ca. 12°C).

Die Haftzugfestigkeit wurde gemäß DIN 18156 nach der Lagerung mit einem Abzugsgerät der Firma Herion mit einer Laststeigerungsrate von 250 N/s bestimmt. Die Meßwerte in N/mm² sind in Tabelle 1 angegeben und stellen Mittelwerte aus 5 Messungen dar.

**Tabelle 1:**

| Beispiel | Röhren-Absitz (cm) 1 h/24 h | Block festig keit | Tg °C | Ver netzung [%] | Verarbeitung | 28T N/mm2 | 7T/21N N/mm2 | 14T/14TS +70°C N/mm2 | Frost-Tau N/mm2 |
|---|---|---|---|---|---|---|---|---|---|
| V.Bsp.1 | 0.4/0.9 | 2 | 7 | - | 3 | 1.15 | 0.78 | 0.31 | 0.61 |
| Bsp.2 | 0.6/2.3 | 3 | 8 | 45 | 3 | 1.21 | 0.69 | 0.21 | 0.61 |
| Bsp.3 | 0.4/1.3 | 2 | 10 | 63 | 2 | 1.23 | 0.79 | 0.32 | 0.86 |
| Bsp.4 | 0.2/1.0 | 2 | 10 | 70 | 2 | 1.44 | 1.05 | 0.49 | 1.15 |
| Bsp.5 | 0.4/0.7 | 2 | 9 | 78 | 3 | 1.32 | 1.03 | 0.41 | 1.12 |
| Bsp.6 | 0.2/1.0 | 2 | 10 | 85 | 3 | 1.10 | 0.89 | 0.34 | 0.98 |

Die Schutzkolloid-stabilisierten Styrol-1,3-Butadien-Copolymerisaten zeigen auch ohne die Copolymerisation von funktionellen Comonomeren hervorragende Redispergierbarkeit und Blockfestigkeit. Die mechanische Festigkeit der damit hergestellten Verklebungen ist insbesondere bei einem Vernetzungsgrad von 60 bis 80 % hervorragend.

## Patentansprüche

1. Verwendung von wässrigen Polymerdispersionen oder in Wasser redispergierbaren Polymerpulvern auf der Basis von Schutzkolloid-stabilisierten Vinylaromat-1,3-Dien-Mischpolymerisaten in Baukleberrezepturen, wobei die Polymerdispersionen und die Polymerpulver durch Emulsionspolymerisation eines Gemisches enthaltend mindestens einen Vinylaromaten und mindestens ein 1,3-Dien, in Gegenwart von einem oder mehreren Srhutzkolloiden und unter Ausschluß von Emulgator, und gegebenenfalls Trocknung der damit erhaltenen wässrigen Polymerdispersion, erhalten werden.

2. Verwendung nach Anspruch 1 **dadurch gekennzeichnet, daß** als Vinylaromat 20 bis 80 Gew.-% Styrol und als 1,3-Dien 20 bis 80 Gew.-% 1,3-Butadien, gegebenenfalls in Gegenwart weiterer Comonomere polymerisiert werden.

3. Verwendung nach Anspruch 1 und 2, **dadurch gekennzeichnet, daß** als Schutzkolloide ein oder mehrere Polyvinylalkohole, Stärken, modifizierte Stärken wie Stärkeether, Dextrine und Cyclodextrine, Cellulosen und deren Carboxymethyl-, Methyl-, Hydroxyethyl-, Hydroxypropyl-Derivate, Poly(meth)acrylsäure, Poly(meth)acrylamid, Melaminformaldehydsulfonate, Naphthalinformaldehydsulfonate eingesetzt werden.

4. Verwendung nach Anspruch 1 bis 3, **dadurch gekennzeichnet, daß** als Schutzkolloide ein oder mehrere, gegebenenfalls hydrophob modifizierte, Polyvinylalkohole mit einem Hydrolysegrad von 80 bis 95 Mol% und einer Höpplerviskosität, in 4 %-iger wässriger Lösung von 1 bis 30 mPas eingesetzt werden.

5. Verwendung nach Anspruch 1 bis 4, **dadurch gekennzeichnet, daß** der Vernetzungsgrad der Vinylaromat-1,3-Dien-Mischpolymerisate von 60 bis 80 % beträgt.

6. Verwendung nach Anspruch 1 bis 5, **dadurch gekennzeichnet, daß** die Baukleberrezeptur als zementhaltiger oder zementfreier, gegebenenfalls pastöser, Fliesenkleber verwendet wird.

7. Verwendung nach Anspruch 1 bis 5, **dadurch gekennzeichnet, daß** die Baukleberrezeptur als zementhaltiger oder zementfreier, gegebenenfalls pastöser, Vollwärmeschutzkleber verwendet wird.

## Claims

1. Use of aqueous polymer dispersions or water-redispersible polymer powders based on vinylaromatic/1,3-diene copolymers stabilized with protective colloids in building adhesive formulations, the polymer dispersions and the polymer powders being obtained by emulsion polymerization of a mixture comprising at least one vinylaromatic and at least one 1,3-diene in the presence of one or more protective colloids, with exclusion of any emulsifier, and if appropriate drying of the aqueous polymer dispersion obtained by this process.

2. Use according to Claim 1, **characterized in that** 20 to 80% by weight of styrene, as the vinylaromatic, and 20 to 80% by weight of 1,3-butadiene, as the 1,3-diene, are polymerized, optionally in the presence of further comonomers.

3. Use according to Claim 1 and 2, **characterized in that** one or more polyvinyl alcohols, starches, modified starches, such as starch ethers, dextrins and cyclodextrins, celluloses and carboxymethyl, methyl, hydroxyethyl and hydroxypropyl derivatives thereof, poly(meth)acrylic acid, poly(meth)acrylamide, melamine-formaldehyde sulphonates and naphthalene-formaldehyde sulphonates are employed as the protective colloids.

4. Use according to Claims 1 to 3, **characterized in that** one or more optionally hydrophobically modified polyvinyl alcohols with a degree of hydrolysis of 80 to 95 mol% and a Höppler viscosity in 4% strength aqueous solution of 1 to 30 mPas are employed as the protective colloids.

5. Use according to Claims 1 to 4, **characterized in that** the degree of crosslinking of the vinylaromatic/1,3-diene copolymers is 60 to 80%.

6. Use according to Claims 1 to 5, **characterized in that** the building adhesive formulation is used as a cement-containing or cement-free, optionally paste-like tile adhesive.

7. Use according to Claims 1 to 5, **characterized in that** the building adhesive formulation is used as a cement-containing or cement-free, optionally paste-like full thermal insulation adhesive.

## Revendications

1. Utilisation de dispersions aqueuses de polymère ou de poudres de polymère redispersibles dans l'eau à base de copolymères d'aromatique de vinyle et de 1,3-diène stabilisés par des colloïdes de protection dans des formulations de colle pour la construction, les dispersions de polymère et les poudres de polymère étant obtenues par polymérisation dans une émulsion d'un mélange contenant au moins un aromatique de vinyle et au moins un 1,3-diène, en présence d'un ou de plusieurs colloïdes de protection et en excluant un émulsifiant, et le cas échéant séchage des dispersions aqueuses de polymère ainsi obtenues.

2. Utilisation selon la revendication 1, **caractérisée en ce qu'**on polymérise comme aromatique de vinyle 20 à 80 % en poids de styrène et comme 1,3-diène 20 à 80 % en poids de 1,3-butadiène, le cas échéant en présence d'autres comonomères.

3. Utilisation selon les revendications 1 et 2, **caractérisée en ce qu'**on utilise comme colloïdes de protection un ou plusieurs poly(alcools vinyliques), amidons, amidons modifiés, tels que des amidon-éthers, dextrines et cyclodextrines, celluloses et leurs dérivés à base de carboxyméthyle, méthyle, hydroxy-éthyle, hydroxypropyle, poly(acides (méth)acryliques), poly((méth)acrylamides), mélamineformaldéhyde-sulfonates, naphtalèneformaldéhydesulfonates.

4. Utilisation selon les revendications 1 à 3, **caractérisée en ce qu'**on utilise comme colloïdes de protection un ou plusieurs poly(alcools vinyliques), le cas échéant modifiés de manière hydrophobe, présentant un degré d'hydrolyse de 80 à 95 % en mole et une viscosité de Höppler, dans une solution aqueuse à 4 %, de 1 à 30 mPa.s.

5. Utilisation selon les revendications 1 à 4, **caractérisée en ce que** le degré de réticulation des copolymères d'aromatique de vinyle et de 1,3-diène est de 60 à 80 %.

6. Utilisation selon les revendications 1 à 5, **caractérisée en ce que** la formulation de colle pour la construction est utilisée en tant que colle pour carrelage contenant du ciment ou exempte de ciment, le cas échéant pâteuse.

7. Utilisation selon les revendications 1 à 5, **caractérisée en ce que** la formulation de colle pour la construction est utilisée en tant que colle calorifuge intégrale contenant du ciment ou exempte de ciment, le cas échéant pâteuse.
